# EUROPÄISCHE PATENTSCHRIFT

(11) **EP 1 182 344 B1**
(45) Veröffentlichungstag und Bekanntmachung des Hinweises auf die Patenterteilung: **07.04.2004**
(21) Anmeldenummer: 01119635.9
(22) Anmeldetag: 21.08.2001
(51) Int. Cl.: F02M 25/06, F02M 25/07

(54) **Vorrichtung zur Rückführung von Gas an einem Verbrennungsmotor**
Device to recirculate gas for an internal combustion engine
Dispositif de recyclage de gaz pour un moteur à combustion interne

(30) Priorität: 25.08.2000 DE 20014711 U
(43) Veröffentlichungstag der Anmeldung: 27.02.2002
(73) Patentinhaber: Mann + Hummel GmbH, 71638 Ludwigsburg (DE)
(72) Erfinder: Jessberger, Thomas, 71277 Rutesheim (DE)
(74) Vertreter: Voth, Gerhard, Dipl.-Ing.

(56) Entgegenhaltungen:
- WO-A-94/04815
- GB-A- 2 324 338
- US-A- 5 813 375
- PATENT ABSTRACTS OF JAPAN vol. 1996, no. 05, 31. Mai 1996 (1996-05-31) & JP 08 028308 A (TOYOTA MOTOR CORP), 30. Januar 1996 (1996-01-30)
- PATENT ABSTRACTS OF JAPAN vol. 016, no. 545 (M-1337), 16. November 1992 (1992-11-16) & JP 04 203405 A (SUZUKI MOTOR CORP), 24. Juli 1992 (1992-07-24)

## Beschreibung

### Stand der Technik

Die Erfindung betrifft eine Vorrichtung zur Rückführung von Abgas und Gas einer Kurbelgehäuseentlüftung bei einem Verbrennungsmotor nach dem Oberbegriff des Hauptanspruchs.

Es ist heute weitgehend üblich, dass Verbrennungsmotoren für Kraftfahrzeuge mit einer Abgasrückführung ausgestattet sind, da dies aufgrund weitreichender Bestimmungen für die Einhaltung von Grenzwerten aus technischen Gründen sinnvoll ist. Beispielsweise werden in der Regel Benzin- und Dieselmotoren mit Direkteinspritzung des Kraftstoffes heute schon mit einer solchen Angasrückführung ausgestattet.

Es ist bereits aus der DE 197 17 040 C1 bekannt, dass die Abgasrückführungsleitung und eine Leitung für die Kurbelgehäuseentlüftung über eine Metallhülse thermisch an den Zylinderkopfflansch des Verbrennungsmotors angekoppelt sind. Hiermit könnten bei extrem niedrigen Außentemperaturen Funktionsbeeinträchtigungen oder gar Ausfälle, im Extremfall ein Einfrieren der Kurbelgehäuseentlüftung, eventuell vermieden werden. Aus der DE 195 25 542 A1 ist darüber hinaus bekannt, dass am Anschlussflansch der Kurbelgehäusegas-Rückführungsleitung eine Heizeinrichtung, z.B. mit einem Widerstandsheizelement, angeschlossen ist.

Nachteilig ist bei zuerst genannten Anordnung jedoch, dass die Hülse ein bearbeitungsintensives Bauteil ist, das mit verschiedenen Dreh- und Bohrvorgänge aus verschiedenen Bearbeitungsrichtungen hergestellt werden muss. Es sind weiterhin überhaupt zusätzliche Bauteile in Form der Hülse, der 0-Ringe und ggf. zusätzlicher Heizelemente sowie aufwendige Montagevorgänge notwendig. Im Zylinderkopfflansch des Saugrohres für den Verbrennungsmotor müssen darüber hinaus zusätzliche Kanäle integriert werden um die Kurbelgehäuseentlüftungsgase auf die einzelnen Zylinder zu verteilen.

Im Bereich des Zylinderkopfflanschs ist bei den üblichen Verbrennungsmotoren allerdings in der Regel sehr wenig Platz um zusätzliche Bauteile, wie die Hülse, die Kanäle oder Heizelemente zu integrieren, da gerade bei direkteinspritzenden Verbrennungsmotoren im Bereich des Zylinderkopfflansches sehr wenig Platz ist, aufgrund des wegen der Hochdruckeinspritzung relativ großen Kraftstoffverteilers und der Kraftstoffleitungen, wobei unter Umständen auch die Einspritzventile in diesem Bereich platziert werden müssen. In der Kaltstartphase des Verbrennungsmotors muss der Zylinderkopfflansch und das Kühlwasser mit seiner hohen Wärmespeicherkapazität außerdem erst einmal erwärmt werden.

### Aufgabenstellung

Der Erfindung liegt die Aufgabe zugrunde, eine Vorrichtung zur Rückführung von Abgasen so fortzubilden, dass der Bauteilaufwand möglichst gering ist und die thermische Ankopplung nicht an den sehr stark beengten und schlecht zugänglichen Zylinderkopfflansch gebunden ist.

### Vorteile der Erfindung

Die erfindungsgemäße Vorrichtung der eingangs angegebenen Art, bei der Verbindungsleitungen zur Rückführung von Gasen am Ansaugsystem eines Verbrennungsmotors über eine gemeinsame Anschlussvorrichtung angeschlossen sind, ist in vorteilhafter Weise so ausgebildet, dass die gemeinsame Anschlussvorrichtung ein wärmeleitender Anschlussflansch ist, der mit der Abgasrückführungsleitung verbunden ist und einen seitlich in einem geeigneten Abstand angeordneten Stutzen für den Anschluss der Kurbelgehäuse-Entlüftungsleitung aufweist. Hierbei ist der Stutzen über eine Drosselbohrung im Anschlussflansch und eine Öffnung im Saugrohr an das Ansaugsystem des Verbrennungsmotors gekoppelt durch die die Kurbelgehäuse-Entlüftungsgase in das Saugrohr eingeleitet werden. Die gemeinsame Anschlussvorrichtung ist dabei wegen der thermischen Belastung vorzugsweise aus Metall hergestellt.

In vorteilhafter Weise erwärmen gemäß der Erfindung die Abgase von der ersten Zündung an, ohne Zeitverzug für Erwärmung von Kühlwasser oder des Zylinderkopfflansches, über den gemeinsamen Anschlussflansch die Drosselbohrung für die Kurbelgehäuse-Entlüftungsgase, so dass ein Einfrieren verhindert ist.

Die Einleitung der Gase wird über den gemeinsame Anschlussflansch bevorzugt im Bereich der Drosselklappe im Ansaugsystem des Verbrennungsmotors, z.B. über mindestens zwei Schraubverbindungen und zwischenliegende Dichtungen, angebracht, um eine optimale Vermischung mit der Ansaugluft zu erhalten. Die Einleitung der Gase kann dabei mit der erfindungsgemäßen Vorrichtung beliebig im Bereich rund um die Drosselklappe gewählt werden, gegebenenfalls mit gewissen Einbußen bei der Vermischung mit der Ansaugluft auch beliebig im Bereich des Sammlers, da hier eventuell mehr Platz zur Verfügung als im Bereich des Zylinderkopfflansches.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

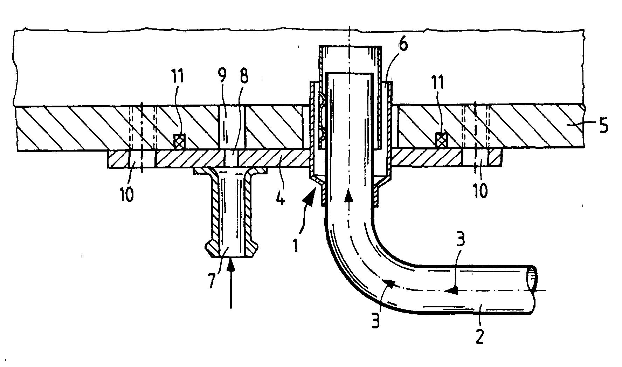

Ein Ausführungsbeispiel der erfindungsgemäßen Vorrichtung zur Gasrückführung bei einem Verbrennungsmotor wird anhand der einzigen Figur der Zeichnung erläutert.

### Beschreibung des Ausführungsbeispiels

In der Figur ist ein Schnitt durch einen Teilbereich des Ansaugsystems eines hier nicht dargestellten Verbrennungsmotors mit einer Vorrichtung 1 zur Rückführung von Abgas gezeigt. Das Abgas strömt in einer Rückführungsleitung 2 gemäß Pfeile 3 zu einem Anschlussflansch 4 am Saugrohr 5 des Verbrennungsmotors. Der Anschlussflansch 4 ist hier noch mit einer Kühlvorrichtung 6 versehen, die für die Erfindung jedoch nicht von Bedeutung ist.

Der in der Figur gezeigte metallische Anschlussflansch 4, der als Standardbauelement ausgeführt werden kann, ist gemäß des Ausführungsbeispiels um einen Stutzen 7 erweitert, durch den mittels einer auf den Stutzen 7 steckbaren Verbindungsleitung Kurbelgehäuse-Entlüftungsgase in das Saugrohr 5 eingeleitet werden können. Hierzu weist der Anschlussflansch 4 eine Drosselbohrung 8 und eine größere Bohrung 9 im Saugrohr 5 auf. Der Anschlussflansch 4 ist vorzugsweise über mindestens zwei Schraubverbindungen 10 und zwischenliegende Dichtungen 11 angebracht.

Die Abgasrückführungsgase erwärmen von der ersten Zündung des Verbrennungsmotors an über den gemeinsamen Anschlussflansch 4 die Drosselbohrung 8 für die Kurbelgehäuse-Entlüftungsgase. Die Einleitung der zuvor beschriebenen Gase wird dabei bevorzugt im Bereich der Drosselklappe des hier nicht näher gezeigten Verbrennungsmotors angebracht, um eine optimale Vermischung mit der Ansaugluft im Saugrohr 5 zu erhalten.

## Patentansprüche

1. Vorrichtung zur Rückführung von Abgas und von Gasen einer Kurbelgehäuseentlüftung bei einem Verbrennungsmotor über Verbindungsleitungen (2,7), die am Ansaugsystem eines Verbrennungsmotors über eine gemeinsame Anschlussvorrichtung (4) angeschlossen sind, **dadurch gekennzeichnet, dass**
- die gemeinsame Anschlussvorrichtung ein wärmeleitender Anschlussflansch (4) ist, der mit der Abgasrückführungsleitung (2) verbunden ist und einen seitlich in einem geeigneten Abstand angeordneten Stutzen (7) für den Anschluss der Kurbelgehäuse-Entlüftungsleitung aufweist, wobei
- der Stutzen (7) über eine Drosselbohrung (8) im Anschlussflansch (4) und eine Öffnung (9) im Saugrohr (5) an das Ansaugsystem des Verbrennungsmotors gekoppelt ist.

2. Vorrichtung nach Anspruch 1, **dadurch gekennzeichnet, dass**
- der gemeinsame Anschlussflansch (4) aus Metall hergestellt ist.

3. Vorrichtung nach Anspruch 1 oder 2, **dadurch gekennzeichnet, dass**
- der gemeinsame Anschlussflansch (4) im Bereich der Drosselklappe im Ansaugsystem des Verbrennungsmotors angebracht ist.

4. Vorrichtung nach einem der vorhergehenden Ansprüche, **dadurch gekennzeichnet, dass**
- der gemeinsame Anschlussflansch (4) über mindestens zwei Schraubverbindungen (10) und zwischenliegende Dichtungen (11) angebracht ist.

## Claims

1. Apparatus for recycling exhaust gas and gases in a crankcase breather pipe in an internal combustion engine via connecting lines (2, 7), which are connected to the intake system of an internal combustion engine via a common connecting device (4), **characterised in that**
- the common connecting device is a heat-conducting connection flange (4), which is connected to the exhaust gas return line (2) and has a connection (7), which is disposed laterally at a suitable spacing, for the connection of the crankcase breather pipe, wherein
- the connection (7) is coupled to the intake system of the intemal combustion engine via a throttle bore (8) in the connection flange (4) and an opening (9) in the intake pipe (5).

2. Apparatus according to daim 1, **characterised in that**
- the common connection flange (4) is produced from metal.

3. Apparatus according to claim 1 or 2, **characterised in that**
- the common connection flange (4) is mounted in the intake system of the internal combustion engine in the region of the throttle valve.

4. Apparatus according to one of the preceding daims, **characterised in that**
- the common connection flange (4) is mounted via at least two screw connections (10) and sealing means (11) which are located in between.

## Revendications

1. Dispositif de recyclage des gaz d'échappement et des gaz d'un dispositif d'évacuation du carter dans un moteur à combustion interne, par le biais de conduites de raccordement (2, 7) raccordées au système d'admission d'un moteur à combustion interne au moyen d'un dispositif de raccordement commun (4),
**caractérisé en ce que**
- le dispositif de raccordement commun est une bride de raccordement (4) conductrice de chaleur reliée à la conduite de recyclage des gaz d'échappement (2) et qui présente un raccord (7) disposé sur le côté à une distance appropriée pour le raccordement de la conduite d'évacuation du carter, et
- le raccord (7) est couplé au système d'admission du moteur à combustion interne par le biais d'un orifice d'étranglement (8) dans la bride de raccordement (4) et d'une ouverture (9) dans la tubulure d'admission (5).

2. Dispositif selon la revendication 1,
**caractérisé en ce que**
- la bride de raccordement commune (4) est fabriquée en métal.

3. °)Dispositif selon la revendication 1 ou 2,
**caractérisé en ce que**
la bride de raccordement commune (4) est disposée dans la zone du clapet d'étranglement, dans le système d'admission du moteur à combustion interne.

4. Dispositif selon l'une quelconque des revendications précédentes,
**caractérisé en ce que**
la bride de raccordement commune (4) est montée à l'aide d'au moins deux liaisons boulonnées (10) et de joints (11) intercalés.
